(19) Europäisches Patentamt
European Patent Office
Office européen des brevets

(11) **EP 4 718 287 A1**

(12) **EUROPEAN PATENT APPLICATION**
published in accordance with Art. 153(4) EPC

(43) Date of publication:
**01.04.2026 Bulletin 2026/14**

(21) Application number: **24822730.8**

(22) Date of filing: **13.06.2024**

(51) International Patent Classification (IPC):
**G06F 16/9535** (2019.01)

(52) Cooperative Patent Classification (CPC):
**G06F 16/9535; G06N 3/0464; G06N 3/084**

(86) International application number:
**PCT/CN2024/098847**

(87) International publication number:
**WO 2024/255781 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 CN 202310722631**

(71) Applicant: **Huawei Technologies Co., Ltd.
Shenzhen, Guangdong 518129 (CN)**

(72) Inventors:
• **LIU, Weiwen**
**Shenzhen, Guangdong 518129 (CN)**
• **XI, Yunjia**
**Shanghai 200240 (CN)**
• **CHEN, Bo**
**Shenzhen, Guangdong 518129 (CN)**
• **LIN, Jianghao**
**Shanghai 200240 (CN)**
• **TANG, Ruiming**
**Shenzhen, Guangdong 518129 (CN)**
• **ZHANG, Rui**
**Shenzhen, Guangdong 518129 (CN)**
• **ZHANG, Weinan**
**Shanghai 200240 (CN)**
• **YU, Yong**
**Shanghai 200240 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND RELATED APPARATUS**

(57) A data processing method is provided and may be applied to the field of artificial intelligence. The method includes: obtaining a first prompt prompt, where the first prompt includes attribute information of a user, and the first prompt indicates to infer a preference of the user based on the attribute information of the user; obtaining first information based on the first prompt by using a large language model LLM; and predicting, based on the first information and second information by using a recommendation model, information about an operation performed by the user on an item, where the second information is attribute information of the item. In this application, the prompt (that is, the first prompt) is used to guide the LLM to infer the preference of the user, and the preference information is used as an input of the recommendation model. By combining advantages of the LLM and the conventional recommendation model, a more accurate and more explainable recommendation result can be obtained, thereby improving recommendation accuracy of the recommendation model.

Obtain a first prompt prompt, where the first prompt includes attribute information of a user, and the first prompt indicates to infer a preference of the user based on the attribute information of the user — 501

Obtain first information based on the first prompt by using a large language model LLM — 502

Predict, based on the first information and second information by using a recommendation model, information about an operation performed by the user on an item, where the second information is attribute information of the item — 503

FIG. 5

EP 4 718 287 A1

**Description**

This application claims priority to Chinese Patent Application No. 202310722631.3, filed with the China National Intellectual Property Administration on June 16, 2023 and entitled "DATA PROCESSING METHOD AND RELATED APPARATUS", which is incorporated herein by reference in its entirety.

**TECHNICAL FIELD**

This application relates to the field of artificial intelligence, and in particular, to a data processing method and a related apparatus.

**BACKGROUND**

Artificial intelligence (artificial intelligence, AI) is a theory, a method, a technology, and an application system in which human intelligence is simulated, extended, and expanded by using a digital computer or a machine controlled by a digital computer, to perceive an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. Artificial intelligence is to research design principles and implementation methods of various intelligent machines, so that the machines have perception, inference, and decision-making functions.

A machine learning system includes a personalized recommendation system, and trains parameters of a machine learning model based on input data and labels by using an optimization method such as gradient descent. After the model parameters converge, the model may be used to complete prediction of unknown data. The following uses prediction of a click-through rate in the personalized recommendation system as an example. Input data of the personalized recommendation system includes user attributes and commodity attributes. How to predict a personalized recommendation list based on a user preference has important impact on improvement of recommendation accuracy of the recommendation system.

An existing recommendation system is basically a closed system. To be specific, a model is trained and deployed based on a given data set of the closed system. Data used in the recommendation system is limited to one or more specific application fields, and is isolated from knowledge of the external world. Therefore, information that can be used for learning of the recommendation model is limited, and recommendation accuracy of the model is low.

**SUMMARY**

This application provides a data processing method, to improve accuracy of a recommendation model.

According to a first aspect, this application provides a data processing method. The method includes: obtaining a first prompt prompt, where the first prompt includes attribute information of a user, and the first prompt indicates to infer a preference of the user based on the attribute information of the user; obtaining first information based on the first prompt by using a large language model LLM; and predicting, based on the first information and second information by using a recommendation model, information about an operation performed by the user on an item, where the second information is attribute information of the item. In this embodiment of this application, the prompt (that is, the first prompt) is used to guide the LLM to infer the preference of the user, and the preference information is used as an input of the recommendation model. By combining advantages of the LLM and the conventional recommendation model, a more accurate and more explainable recommendation result can be obtained, thereby improving recommendation accuracy of the recommendation model.

In a possible implementation, the first prompt further includes historical operation information of the user, and the first prompt specifically indicates to infer the preference of the user based on the attribute information of the user and the historical operation information.

In a possible implementation, the first prompt further includes a factor associated with a preference of the user for the item, and the first prompt specifically indicates to analyze the preference of the user based on the attribute information of the user and the factor.

In a possible implementation, the factor is determined based on a third prompt by using the LLM, and the third prompt indicates to determine the factor associated with the preference of the user for the item.

In a possible implementation, the first information is related to the preference of the user, and the preference is not included in the attribute information.

In a possible implementation, the first prompt further indicates to determine an explanation of the inferred preference of the user.

In a possible implementation, the method further includes: obtaining a second prompt, where the second prompt indicates to provide the attribute information of the item; and obtaining the second information based on the second prompt by using the LLM.

In a possible implementation, attribute information of an item in a preset database may be incomplete. The LLM may be guided by using the prompt to enrich the attribute information of the item.

In a possible implementation, the second prompt specifically indicates to provide the attribute information of the item related to the factor associated with the preference of the user for the item.

In the foregoing embodiment, the first prompt may include the factor related to the preference of the user for the item, and the factor may be some attribute dimensions of the item. Information in these attribute dimensions may be missing in the preset database. Therefore, the LLM can be guided by using the prompt to provide the information.

In a possible implementation, the first information is a description in a natural language or a feature representation obtained by using the LLM.

In a possible implementation, the first information is a description in a natural language, and the method further includes:

obtaining a feature representation of the first information and a feature representation of the second information based on the first information and the second information by using a feature extraction network; and predicting, based on the first information and the second information by using the recommendation model, the information about the operation performed by the user on the item includes: predicting, based on the feature representation of the first information and the feature representation of the second information by using the recommendation model, the information about the operation performed by the user on the item.

In a possible implementation, the feature extraction network includes a first weight determining network, a second weight determining network, a first feature extraction branch, a second feature extraction branch, and a third feature extraction branch. Obtaining the feature representation of the first information and the feature representation of the second information based on the first information and the second information by using the feature extraction network includes: determining a first weight corresponding to the first feature extraction branch and a second weight corresponding to the second feature extraction branch based on the first information by using the first weight determining network; determining a third weight corresponding to the first feature extraction branch and a fourth weight corresponding to the third feature extraction branch based on the second information by using the second weight determining network; determining a first sub-feature and a second sub-feature based on the first information respectively by using the first feature extraction branch and the second feature extraction branch; determining a third sub-feature and a fourth sub-feature based on the second information respectively by using the first feature extraction branch and the third feature extraction branch; merging the first sub-feature and the second sub-feature based on the first weight and the second weight, to obtain a feature representation of the user; and merging the third sub-feature and the fourth sub-feature based on the third weight and the fourth weight, to obtain a feature representation of the item.

In the foregoing manner, by using a mixture of experts adapter, text information is mapped from semantic space to recommendation space, and valid information is stored while dimension reduction and noise processing are performed.

In a possible implementation, the attribute information includes a user attribute of the user, and the user attribute includes at least one of the following: gender, age, occupation, income, hobby, and education level.

In a possible implementation, the attribute information includes an item attribute of the item, and the item attribute includes at least one of the following: item name, developer, installation package size, category, and positive rating.

The attribute information of the user may be an attribute related to a preference feature of the user, and is at least one of gender, age, occupation, income, hobby, and education level. The gender may be male or female, the age may be a number ranging from 0 to 100, the occupation may be teacher, programmer, chef, or the like, the hobby may be basketball, tennis, running, or the like, and the education level may be primary school, middle school, high school, university, or the like. A specific type of the attribute information of the user is not limited in this application.

The item may be a physical item or a virtual item, for example, may be an item like an app, audio/video, a web page, and news. The attribute information of the item may be at least one of item name, developer, installation package size, category, and positive rating. For example, the item is an application. The category of the item may be chat category, running game, office category, or the like, and the positive rating may be a score and a comment made on the item, or the like. A specific type of the attribute information of the item is not limited in this application.

In a possible implementation, the method described in the first aspect may be a feedforward process of model training or a model inference process.

In a possible implementation, the method further includes: when the operation information meets a preset condition, recommending the item to the user.

In a possible implementation, the method further includes: updating the recommendation model based on the operation information and a corresponding label.

According to a second aspect, this application provides a data processing apparatus. The apparatus includes:

a processing module, configured to: obtain a first prompt prompt, where the first prompt includes attribute information of a user, and the first prompt indicates to infer a preference of the user based on the attribute information of the user; obtain first information based on the first prompt by using a large language model LLM; and

predict, based on the first information and second information by using a recommendation model, information about an operation performed by the user on an item, where the second information is attribute information of the item.

In a possible implementation, the first prompt further includes historical operation information of the user, and the first prompt specifically indicates to infer the preference of the user based on the attribute information of the user and the historical operation information.

In a possible implementation, the first prompt further includes a factor associated with a preference of the user for the item, and the first prompt specifically indicates to analyze the preference of the user based on the attribute information of the user and the factor.

In a possible implementation, the factor is determined based on a third prompt by using the LLM, and the third prompt indicates to determine the factor associated with the preference of the user for the item.

In a possible implementation, the first information is related to the preference of the user, and the preference is not included in the attribute information.

In a possible implementation, the first prompt further indicates to determine an explanation of the inferred preference of the user.

In a possible implementation, the processing module is further configured to:

obtain a second prompt, where the second prompt indicates to provide the attribute information of the item; and obtain the second information based on the second prompt by using the LLM.

In a possible implementation, the second prompt specifically indicates to provide the attribute information of the item related to the factor associated with the preference of the user for the item.

In a possible implementation, the first information is a description in a natural language or a feature representation obtained by using the LLM.

In a possible implementation, the first information is a description in a natural language, and the processing module is further configured to:

obtain a feature representation of the first information and a feature representation of the second information based on the first information and the second information by using a feature extraction network.

The processing module is specifically configured to:

predict, based on the feature representation of the first information and the feature representation of the second information by using the recommendation model, the information about the operation performed by the user on the item.

In a possible implementation, the feature extraction network includes a first weight determining network, a second weight determining network, a first feature extraction branch, a second feature extraction branch, and a third feature extraction branch.

The processing module is specifically configured to:

determine a first weight corresponding to the first feature extraction branch and a second weight corresponding to the second feature extraction branch based on the first information by using the first weight determining network;

determine a third weight corresponding to the first feature extraction branch and a fourth weight corresponding to the third feature extraction branch based on the second information by using the second weight determining network;

determine a first sub-feature and a second sub-feature based on the first information respectively by using the first feature extraction branch and the second feature extraction branch;

determine a third sub-feature and a fourth sub-feature based on the second information respectively by using the first feature extraction branch and the third feature extraction branch;

merge the first sub-feature and the second sub-feature based on the first weight and the second weight, to obtain a feature representation of the user; and

merge the third sub-feature and the fourth sub-feature based on the third weight and the fourth weight, to obtain a feature representation of the item.

According to a third aspect, an embodiment of this application provides a data processing apparatus. The apparatus may include a memory, a processor, and a bus system. The memory is configured to store a program, and the processor is configured to execute the program in the memory, to perform the method according to any one of the optional implementations of the first aspect.

According to a fourth aspect, an embodiment of this application provides a computer-readable storage medium. The computer-readable storage medium stores a computer program. When the computer program is run on a computer, the computer is enabled to perform the method according to the first aspect or any one of the optional implementations of the first aspect.

According to a fifth aspect, an embodiment of this application provides a computer program product, including code. When the code is executed, the code is used to implement the method according to the first aspect or any one of the optional implementations of the first aspect.

According to a sixth aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for the execution device or the training device. The chip system may include a chip, or may include a chip and another discrete device.

## BRIEF DESCRIPTION OF DRAWINGS

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4 is a diagram of a recommendation scenario according to an embodiment of this application;
FIG. 5 is a schematic flowchart of a data processing method according to an embodiment of this application;
FIG. 6 is a diagram of effect of a method according to an embodiment of this application;
FIG. 7 is a diagram of a structure of a data processing apparatus according to an embodiment of this application;
FIG. 8 is a diagram of an execution device according to an embodiment of this application;
FIG. 9 is a diagram of a training device according to an embodiment of this application; and
FIG. 10 is a diagram of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

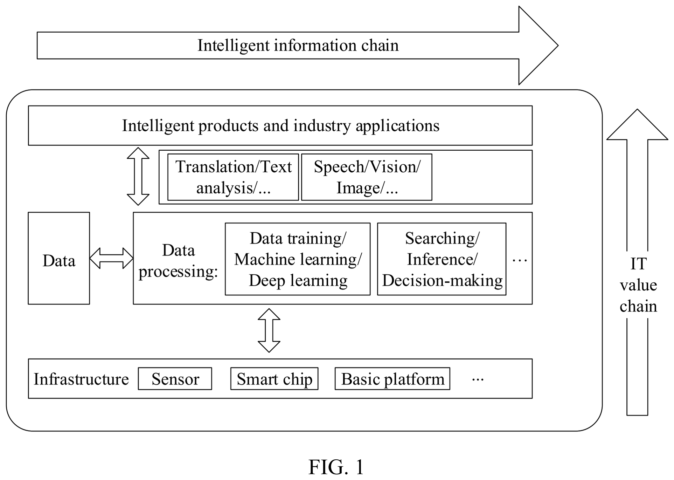

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a legacy device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent products and industry applications

The intelligent products and industry applications are products and applications of the artificial intelligence system in various fields, and are encapsulation for an overall artificial intelligence solution, so that decision making for intelligent information is productized and the applications are implemented. Application fields thereof mainly include an intelligent terminal, intelligent transportation, intelligent healthcare, autonomous driving, a smart city, and the like.

Embodiments of this application may be applied to the information recommendation field. The scenario includes but is not limited to scenarios related to e-commerce product recommendation, search engine result recommendation, application market recommendation, music recommendation, and video recommendation. A recommended item in various application scenarios may also be referred to as an "object" for ease of subsequent description. To be specific, in different recommendation scenarios, the recommended object may be an app, a video, music, or a commodity (for example, a presentation interface of an online shopping platform displays different commodities according to different users, which may also be presented based on a recommendation result of a recommendation model in essence). These recommendation scenarios usually relate to collection of a user behavior log, log data preprocessing (for example, quantization and sampling), sample set training to obtain a recommendation model, and analyze and process, based on the recommendation model, an object (for example, an app or music) in a scenario corresponding to a training sample item. For example, if a sample selected in a training process of the recommendation model is from an operation performed by a user of an application market in a mobile phone on a recommended app, a trained recommendation model is applicable to the app (application) in the mobile phone, or may be used in an app (application) market in another type of terminal to recommend an app on the terminal. The recommendation model finally computes recommendation probabilities or scores of to-be-recommended objects. A recommendation system selects recommendation results according to a specific selection rule. For example, the recommendation results are ranked based on the recommendation probabilities or the scores, and are presented to the user through a corresponding application or terminal device, and the user performs an operation on an object in the recommendation results to perform a process such as generating the user behavior log.

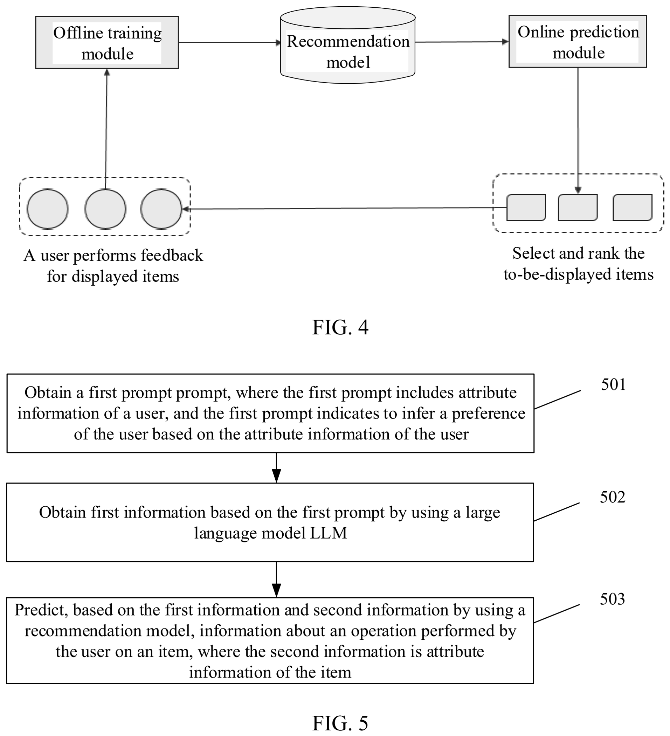

Refer to FIG. 4. In a recommendation process, when a user interacts with a recommendation system, a recommendation request is triggered. The recommendation system inputs the request and related feature information into a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs a user behavior, such as browsing, clicking, and downloading. The user behavior is stored in a log as training data. An offline training module irregularly updates a parameter of the recommendation model to improve recommendation effect of the model.

For example, when the user starts an application market on a mobile phone, a recommendation module of the application market may be triggered. The recommendation module of the application market predicts probabilities that the user downloads given candidate applications, based on a historical download record of the user, a clicking record of the user, features of the applications, and environment feature information such as time and a location. The application market displays the applications in descending order of the probabilities based on a prediction result, to increase download probabilities of the applications. Specifically, an application that is more likely to be downloaded is arranged in the front rank, and an application that is less likely to be downloaded is arranged in the rear rank. The user behavior is also stored in a log, and an offline training module trains and updates a parameter of a prediction model.

For another example, in an application related to a life-long companion, a cognitive brain may be constructed by simulating a mechanism of a human brain and based on historical data of the user in domains such as video, music, and news by using various models and algorithms, thereby establishing a life-long learning system framework for the user. The life-long companion may record a past event of the user based on system data, application data, and the like, understand a current intent of the user, predict a future action or a future behavior of the user, and finally implement an intelligent service. At a current first stage, user behavior data (including information such as a device-side SMS message, a photo, and an email event) is obtained from a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

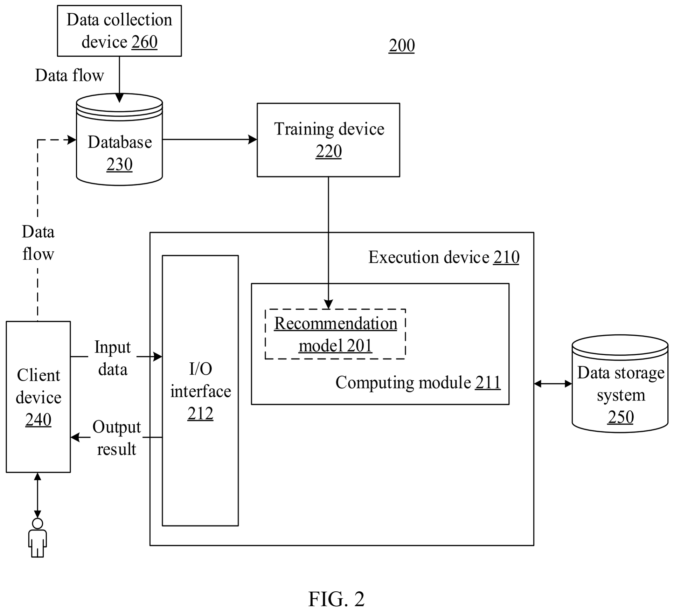

Refer to FIG. 2. An embodiment of the present invention provides a recommendation system architecture 200. A data collection device 260 is configured to collect a sample. One training sample may include a plurality of pieces of feature information (alternatively described as attribute information, for example, a user attribute and an item attribute). There may be a plurality of types of feature information, which may specifically include user feature information, object feature information, and a label feature. The user feature information represents a feature of a user, for example, gender, age, occupation, or hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. Usually a label feature of a sample may be obtained based on information about an operation performed by the user on a recommended object. A sample in which the user performs an operation on a recommended object is a positive sample, and a sample in which the user does not perform an operation on a recommended object or just browses the recommended object is a negative sample. For example, when the user clicks, downloads, or purchases the recommended object, the label feature is 1, indicating that the sample is a positive sample; or if the user does not perform any operation on the recommended object, the label feature is 0, indicating that the sample is a negative sample. The sample may be stored in a database 230 after being collected. A part or all of feature information in the sample in the database 230 may be directly obtained from a client device 240, for example, user feature information, information (used to determine a type identifier) about an operation performed by the user on an object, and object feature information (for example, an object identifier). A training device 220 obtains a model parameter matrix through training based on samples in the database 230, to generate a recommendation model 201 (for example, a feature extraction network and a neural network in embodiments of this application). The following describes in more detail how the training device 220 performs training to obtain the model parameter matrix for generating the recommendation model 201. The recommendation model 201 can be used to evaluate a large quantity of objects to obtain a score of each to-be-recommended object, to further recommend a specified quantity of objects or a preset quantity of objects from an evaluation result of the large quantity of objects. A computing module 211 obtains a recommendation result based on the evaluation result of the recommendation model 201, and recommends the recommendation result to the client device through an I/O interface 212.

In this embodiment of this application, the training device 220 may select positive and negative samples from a sample set in the database 230, add the positive and negative samples to a training set, and then perform training based on the samples in the training set by using a recommendation model, to obtain a trained recommendation model. For implementation details of the computing module 211, refer to detailed descriptions of a method embodiment shown in FIG. 5.

After performing training based on the sample to obtain the model parameter matrix that is used for constructing the recommendation model 201, the training device 220 sends the recommendation model 201 to an execution device 210, or directly sends the model parameter matrix to the execution device 210. The recommendation model is constructed in the execution device 210, for recommending a corresponding system. For example, a recommendation model obtained through training based on a video-related sample may be used in a video website or app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, user identifier, user identity, gender, occupation, and hobby, from the client device 240 through the I/O interface 212. The information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, or may be independently disposed, or may be disposed in another network entity. There may be one or more data storage systems 250.

The computing module 211 processes the user feature information and the feature information of the to-be-recommended object by using the recommendation model 201. For example, the computing module 211 analyzes and processes the user feature information and the feature information of the to-be-recommended object by using the recommendation model 201, to obtain a score of the to-be-recommended object. The to-be-recommended object is ranked based on the score. An object in the front rank is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that FIG. 2 is merely a diagram of a system architecture according to an embodiment of the present invention. A position relationship between devices, components, modules, and the like shown in the figure does not constitute any limitation. For example, in FIG. 2, the data storage system 250 is an external memory relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

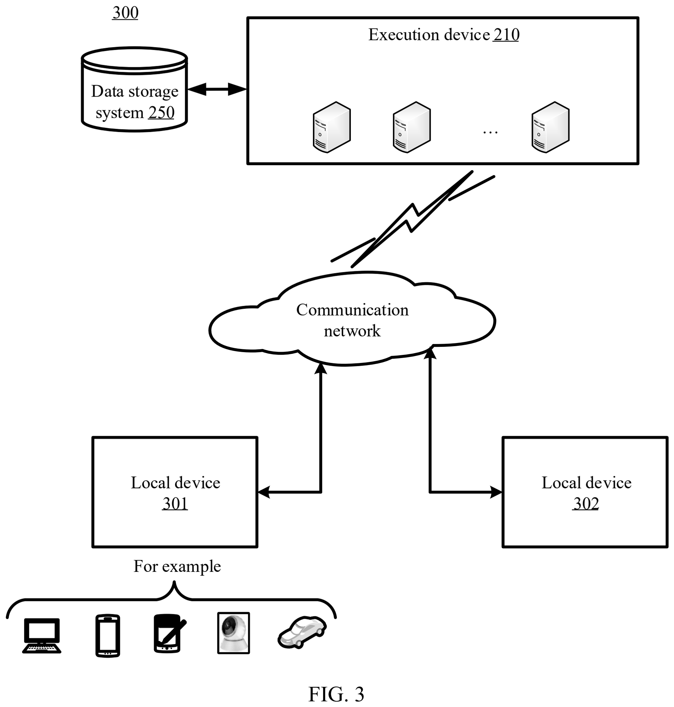

Refer to FIG. 3. An embodiment of the present invention provides a system architecture 300. In this architecture, the execution device 210 is implemented by one or more servers. Optionally, the execution device 210 cooperates with another computing device, for example, a device such as a data storage device, a router, or a load balancer. The execution device 210 may be disposed on one physical site, or distributed on a plurality of physical sites. The execution device 210 may use data in the data storage system 250 or invoke program code in the data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends a to-be-recommended object to a user based on a ranking result. For example, top 10 objects in the ranking result are recommended to the user.

The data storage system 250 is configured to receive and store a parameter that is of the recommendation model and that is sent by a training device, is configured to store data of a recommendation result obtained by using the recommendation model, and certainly may further include program code (or an instruction) needed for normal running of the storage system 250. The data storage system 250 may be one device deployed outside the execution device 210 or a distributed storage cluster including a plurality of devices deployed outside the execution device 210. In this case, when the execution device 210 needs to use the data in the storage system 250, the storage system 250 may send the data needed by the execution device to the execution device 210. Correspondingly, the execution device 210 receives and stores (or buffers) the data. Certainly, the data storage system 250 may be alternatively deployed in the execution device 210. When the data storage system 250 is deployed in the execution device 210, the distributed storage system may include one or more memories. Optionally, when there are a plurality of memories, different memories are configured to store different types of data. For example, the model parameter of the recommendation model generated by the training device and the data of the recommendation result obtained by using the recommendation model may be stored in two different memories respectively.

Users may operate their user devices (for example, the local device 301 and the local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 210 through a communication network of any communication mechanism/communication standard. The communication network may be a wide area network, a local area network, a point-to-point connection, or any combination thereof.

In another implementation, the execution device 210 may be implemented by the local device. For example, the local device 301 may implement a recommendation function of the execution device 210 based on a recommendation model by obtaining user feature information and feeding back a recommendation result to the user, or provide a service for the user of the local device 302.

Embodiments of this application relate to massive application of a neural network. Therefore, for ease of understanding, the following first describes related terms and related concepts such as the neural network in embodiments of this application.

1. Click-through rate (click-through rate, CTR)

The click-through rate, also referred to as a click-through ratio, is a ratio of a quantity of clicks for recommendation information (for example, a recommended item) on a website or an application to a quantity of impressions for the recommendation information. The click-through rate is usually an important indicator in a recommendation system for measuring the recommendation system.

2. Personalized recommendation system

The personalized recommendation system is a system that analyzes historical data of a user (for example, operation information in embodiments of this application) by using a machine learning algorithm, and with this, predicts a new request and provides a personalized recommendation result.

3. Offline training (offline training)

The offline training is a module, in a personalized recommendation system, that iteratively updates a parameter of a recommendation model by using a machine learning algorithm based on historical data of a user (for example, operation information in embodiments of this application) until a specified requirement is met.

4. Online inference (online inference)

The online inference is to predict, based on a model obtained through offline training, preference of a user for a recommended item in a current context environment based on features of the user, the item, and context, and predict probability that the user selects the recommended item.

For example, FIG. 4 is a diagram of a recommendation system according to an embodiment of this application. As shown in FIG. 4, when a user enters a system, a recommendation request is triggered. The recommendation system inputs the request and related information (for example, operation information in this embodiment of this application) of the request into the recommendation model, and then predicts a selection rate of the user for an item in the system. Further, items are ranked in descending order based on predicted selection rates or based on a function of the selection rates. That is, the recommendation system may sequentially display the items at different locations as a recommendation result for the user. The user browses the items at different locations, and performs a user behavior such as browsing, selecting, and downloading. In addition, an actual behavior of the user is stored in a log as training data. An offline training module continuously updates a parameter of the recommendation model to improve prediction effect of the model.

For example, when the user starts an application market on a smart terminal (for example, a mobile phone), a recommendation system in the application market may be triggered. The recommendation system in the application market predicts probabilities that the user downloads candidate recommended apps, based on a historical behavior log of the user, for example, a historical download record of the user, a user selection record, and a feature of the application market, for example, environment feature information such as time and a location. Based on a calculated result, the recommendation system of the application market may present the candidate APPs in descending order of values of the predicted probabilities, to improve a download probability of the candidate APP.

For example, an APP with a relatively high predicted user selection rate may be presented at a front recommendation position, and an APP with a relatively low predicted user selection rate may be presented in a back recommendation position.

The recommendation model may be a neural network model. The following describes related terms and concepts of a neural network that may be used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^T x\right) = f(\sum_{s=1}^{n} W_s x_s + b).$$

Herein, s=1, 2, ..., n; n is a natural number greater than 1; Ws is a weight of xs; b is a bias of the neuron; and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multilayer neural network, may be understood as a neural network including many hidden layers. There is no special metric criterion for the "many" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, b is an offset vector, W is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients W and offset vectors $\vec{b}$. Definitions of these parameters in the DNN are as follows: The coefficient W is used as an example. It is assumed that in a DNN having three layers, a linear coefficient from a $4^{th}$ neuron at a $2^{nd}$ layer to a $2^{nd}$ neuron at a $3^{rd}$ layer is defined as $W_{24}^{3}$. The superscript 3 represents a layer at which the coefficient W is located, and the subscript corresponds to an output $3^{rd}$-layer index 2 and an input $2^{nd}$-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training the deep neural network, because it is expected that an output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

**(4) Back propagation algorithm**

An error back propagation (back propagation, BP) algorithm may be used to correct a value of a parameter in an initial model in a training process, so that an error loss of the model becomes smaller. Specifically, an input signal is transferred forward until an error loss occurs in an output, and the parameter in the initial model is updated based on back propagation error loss information, to make the error loss converge. The back propagation algorithm is an error-loss-centered back propagation motion intended to obtain a parameter, such as a weight matrix, of an optimal model.

**(5) Machine learning system**

The machine learning system trains parameters of a machine learning model based on input data and labels by using an optimization method such as gradient descent, and finally makes a prediction on unknown data by using a trained model.

**(6) Personalized recommendation system**

The personalized recommendation system is a system that analyzes and models historical data of a user by using a machine learning algorithm, and with this, predicts a new user request and provides a personalized recommendation result.

**(7) Prompt prompt**

The prompt is a natural language term, and includes a hard template and a soft template. The hard template is usually a natural language word or sentence with a specific meaning, and the soft template is usually a parameterized representation vector with no meaning.

**(8) Large language model (large language model, LLM)**

The large language model is a language model including more than 10 billion parameters, for example, GPT-4 and LLaMA. These parameters are trained on a large amount of textual data.
A machine learning system includes a personalized recommendation system, and trains parameters of a machine learning model based on input data and labels by using an optimization method such as gradient descent. After the model parameters converge, the model may be used to complete prediction of unknown data. The following uses prediction of a click-through rate in the personalized recommendation system as an example. Input data of the personalized recommendation system includes user attributes and commodity attributes. How to predict a personalized recommendation list based on a user preference has important impact on improvement of recommendation accuracy of the recommendation system.
An existing recommendation system is basically a closed system. To be specific, a model is trained and deployed based on a given data set of the closed system. Data used in the recommendation system is limited to one or more specific application fields, and is isolated from knowledge of the external world. Therefore, information that can be used for learning of the recommendation model is limited, and recommendation accuracy of the model is low.
Some existing research work attempts to directly apply the LLM to the recommendation system, by converting a recommendation task and a user feature into a text prompt for recommendation. Although some preliminary findings have been made, effect of directly applying the LLM to the recommendation system is not ideal mainly due to the following disadvantages:

(1) Language bias: The LLM is not trained based on specific recommendation data. The LLM cannot adapt to a preference of an individual user due to lack of knowledge in the recommendation field and collaborative signals.
(2) Inference latency: Due to an excessively large quantity of model parameters, it is not practical to use the LLM as the recommendation system in an industrial environment. For billions of users and thousands of user behaviors, the LLM cannot meet a low-latency requirement of the recommendation system. A size of the large model further hinders model update and optimization based on real-time user feedback.
(3) Compositionality gap: The LLM often faces a compositionality gap problem. To be specific, the LLM has difficulties in generating correct answers for complex compositionality questions. However, the LLM can correctly answer all sub-questions. It is currently beyond a capability of the LLM to directly generate a recommendation result, because complex user interests need to be analyzed in the recommendation task. This is a complex multi-step compositionality problem.

To resolve the foregoing problem, this application provides a data processing method. The data processing method may be a model inference process.

FIG. 5 is a diagram of an embodiment of a data processing method according to an embodiment of this application. As shown in FIG. 5, the data processing method provided in this embodiment of this application includes the following steps.

501: Obtain a first prompt prompt, where the first prompt includes attribute information of a user, and the first prompt indicates to infer a preference of the user based on the attribute information of the user.

In this embodiment of this application, the prompt (that is, the first prompt in this embodiment of this application) is used to guide an LLM to analyze (or referred to as infer) the preference of the user. The preference herein may be expressed as: a specific item (in other words, an item with some specific features) (the item may be an item currently to be processed by a recommendation system or items of a same type) for which the user has a higher (or lower) preference.

The following describes the first prompt in this embodiment of this application.

In a possible implementation, in order that an LLM predicts the preference of the user, the first prompt may include the attribute information of the user, and the attribute information may be a profile feature of the user.

The attribute information of the user may be an attribute related to a preference feature of the user, and is at least one of gender, age, occupation, income, hobby, and education level. The gender may be male or female, the age may be a number ranging from 0 to 100, the occupation may be teacher, programmer, chef, or the like, the hobby may be basketball, tennis, running, or the like, and the education level may be primary school, middle school, high school, university, or the like. A specific type of the attribute information of the user is not limited in this application.

In a possible implementation, the first prompt may indicate to infer the preference of the user based on the attribute information of the user. For example, the first prompt may indicate, in a form of a natural language, the LLM to infer, based on the attribute information of the user, a specific (or a specific type of) item that the user prefers.

For example, the first prompt may include: Given a user who is {{user description}}, Analyze user's preferences; User description: female, 25-34, and in sales/marketing.

In a possible implementation, the first prompt may further include historical operation information of the user. For example, the historical operation information may be information about a historical operation performed by the user on the item (the item may be an item currently to be processed by the recommendation system or items of a same type). For example, the historical operation information may be an operation performed by the user on the item, for example, browsing, clicking, adding to a shopping cart, or purchasing. The historical operation information of the user can reflect the preference of the user to some extent.

In a possible implementation, the first prompt may specifically indicate to infer the preference of the user based on the attribute information of the user and the historical operation information. For example, the first prompt may indicate, in a form of a natural language, the LLM to infer, based on the attribute information of the user and the historical operation information of the user, a specific (or a specific type of) item that the user prefers.

For example, the first prompt may include: Given a user who is {{user description}}, this user's movie viewing history over time is listed below: {{user history}}, Analyze user's preferences; User description: female, 25-34, and in sales/marketing. User history: What Lies Beneath (2000), 5 star: Ghost (1990), 3 star: Aladdin(1992), 4 star: Toy Story (1995), 5 star: Scream (1996), 5 star ....

The recommendation system needs to determine recommendation information based on the attribute information of the user and attribute information of the item. However, not all dimensions of the attribute information of the item affect a degree of the preference of the user for the item, and different dimensions of information affect the degree of the preference of the user for the item in different degrees. In addition, the attribute information, obtained from a preset database, of the item may be incomplete (some attribute information that affects the degree of the preference of the user for the item may be not in the preset database). Consequently, recommendation accuracy of the model is low.

In this embodiment of this application, the prompt may be used to guide the LLM to analyze the factor associated with the preference of the user for the item, that is, the factor associated with the degree of the preference of the user for the item (or whether the user likes an item). The association herein may be a causal relationship. For example, due to some specific factors, the user has a relatively high degree of the preference for the item.

The factor may be a feature of the item. For example, if the item is a movie, a feature related to a preference of the user for the movie may be director, style, duration, country, and the like.

In the foregoing manner, based on a prompt design of preference factor break-down, a key factor that affects preference inference is obtained through break-down based on a language model and expert opinions, thereby effectively stimulating an inference capability and a knowledge obtaining capability of the large language model, to obtain user inference knowledge and item fact knowledge.

In a possible implementation, the first prompt further includes a factor associated with a preference of the user for the item (or an item type), and the first prompt specifically indicates to analyze the preference of the user based on the attribute information of the user and the factor.

For example, the first prompt may include: Given a user who is {{user description}}, Analyze user's preferences (consider factors like {{scenario-specific factors}}; User description: female, 25-34, and in sales/marketing. Scenario-specific factors: genre, director, actors, time period, country character, plot/theme, mood/tone, critical acclaim/award ...

In a possible implementation, the factor is determined based on a third prompt by using an LLM (it should be understood that the LLM herein and an LLM in step 502 may be a same LLM or different LLMs), and the third prompt indicates to determine the factor associated with the preference of the user for the item.

The large language model cannot accurately answer complex inference questions. Therefore, the complex question needs to be broken down first. This embodiment of this application proposes to dynamically break down complex preference inference and knowledge extraction problems into a plurality of key sub-factors for different recommendation scenarios, so that the large language model performs user interest inference and knowledge extraction separately based on factors.

Optionally, the foregoing factors may be obtained by asking the large language model questions, or may be obtained through an expert in the field. The following is an example of asking the large language model questions. A prompt is "Please list 10 key factors that determine whether the user likes a movie". The large language model may provide corresponding replies such as "Type, Actor, and Director".

In a possible implementation, the first prompt further indicates to determine an explanation of the inferred preference of the user. In other words, the prompt is used to guide the LLM to output the explanation of the inferred preference of the user. This explanation can more comprehensively depict the profile feature of the user.

For example, the first prompt may include: Provide clear explanations based on details from the user's viewing history and other pertinent factors.

502: Obtain first information based on the first prompt by using the large language model LLM.

By constructing the first prompt, the LLM may be guided to obtain the preference of the user through analysis, that is, obtain the first information. The first information may be related to the preference of the user, and is not included in the attribute information.

In a possible implementation, the first information is a description in a natural language.

For example, the first information is: It appears that she enjoys a mix of different genres, including drama, thriller, comedy, and animation. She has given high ratings to What Lies Beneath, Toy Story... suggesting she enjoys movies with strong plot character development... Many of the movies she enjoyed, such as Toy Story and The Silence of the Lambs, are critically acclaimed and have won awards....

In a possible implementation, the first information is a feature representation obtained by using the LLM. For example, the first information is an output of an intermediate network layer of the LLM.

503: Predict, based on the first information and second information by using a recommendation model, information about an operation performed by the user on an item, where the second information is the attribute information of the item.

The second information may be the attribute information, obtained from the preset database, of the item.

For example, the item may be a physical item or a virtual item, for example, may be an item like an application (application, APP), audio/video, a web page, and news. The attribute information of the item may be at least one of item name, developer, installation package size, category, and positive rating. For example, the item is an application. The category of the item may be chat category, running game, office category, or the like, and the positive rating may be a score and a comment made on the item, or the like. A specific type of the attribute information of the item is not limited in this application.

In a possible implementation, attribute information of an item in a preset database may be incomplete. The LLM may be guided by using the prompt to enrich the attribute information of the item.

In a possible implementation, a second prompt may be obtained, and the second prompt indicates to provide the attribute information of the item. The second information may be obtained based on the second prompt by using an LLM (it should be understood that the LLM herein and the LLM in step 502 may be a same LLM or different LLMs).

For example, the second prompt may include: Introduce movie ffitem description; Item description: Roman Holiday.

In a possible implementation, the second prompt specifically indicates to provide the attribute information of the item related to the factor associated with the preference of the user for the item.

In the foregoing embodiment, the first prompt may include the factor related to the preference of the user for the item, and the factor may be some attribute dimensions of the item. Information in these attribute dimensions may be missing in the preset database. Therefore, the LLM can be guided by using the prompt to provide the information.

For example, the second prompt may include: Introduce movie ffitem description, and describe its attributes precisely (including but not limited to fscenario-specific factors;). Item description: Roman Holiday. Scenario-specific factors: genre, director, actors, time period, country character, plot/theme, mood/tone, critical acclaim/award ...

For example, the second information obtained by the LLM may be: Roman Holiday is a classic romantic comedy film released in 1953. It was directed by William Wyler and stars Audrey Hepburn, Gregory Peck ... Tthas a light and playful tone throughout, with a touch of melancholy towards the end ... It was a critical and commercial success ... The production quality is top-notch, with beautiful cinematography and stunning locations in Rome ....

In a possible implementation, after the first information and the second information are obtained, the information about the operation performed by the user on the item may be predicted based on the first information and the second information by using the recommendation model.

Because the first information is information obtained by the LLM, the first information may be processed, so that the first information can adapt to an input of the recommendation model.

In a possible implementation, the first information is a description in a natural language, and feature extraction may be performed on the first information, to obtain a feature representation (for example, a low-dimensional eigenvector) that can adapt to the input of the recommendation model.

In a possible implementation, the first information is a high-dimensional feature obtained by the LLM, and dimension reduction processing may be performed on the first information, to obtain a feature representation (for example, a low-dimensional eigenvector) that can adapt to the input of the recommendation model.

In a possible implementation, the second information is a description, obtained by using the LLM, in a natural language, and feature extraction may be performed on the second information, to obtain a feature representation (for example, a low-dimensional eigenvector) that can adapt to the input of the recommendation model.

In a possible implementation, the second information is a high-dimensional feature obtained by the LLM, and dimension reduction processing may be performed on the second information, to obtain a feature representation (for example, a low-dimensional eigenvector) that can adapt to the input of the recommendation model.

The following provides an example of performing feature extraction on the first information and the second information by a network.

In a possible implementation, a feature representation of the first information and a feature representation of the second information may be obtained based on the first information and the second information by using a feature extraction network; and the information about the operation performed by the user on the item may be predicted based on the feature representation of the first information and the feature representation of the second information by using the recommendation model.

In a possible implementation, the feature extraction network includes a first weight determining network, a second weight determining network, a first feature extraction branch, a second feature extraction branch, and a third feature extraction branch.

In a possible implementation, a first weight corresponding to the first feature extraction branch and a second weight corresponding to the second feature extraction branch may be determined based on the first information by using the first weight determining network; a third weight corresponding to the first feature extraction branch and a fourth weight corresponding to the third feature extraction branch are determined based on the second information by using the second weight determining network; a first sub-feature and a second sub-feature are determined based on the first information respectively by using the first feature extraction branch and the second feature extraction branch; a third sub-feature and a fourth sub-feature are determined based on the second information respectively by using the first feature extraction branch and the third feature extraction branch; the first sub-feature and the second sub-feature are merged based on the first weight and the second weight, to obtain a feature representation of the user; and the third sub-feature and the fourth sub-feature are merged based on the third weight and the fourth weight, to obtain a feature representation of the item.

The feature extraction network is of a structure of a mixture of experts adapter, and encodes, compresses, and maps corresponding text knowledge into a low-dimensional contiguous vector. Specifically, in this embodiment of this application, three types of expert network sets are designed: a shared expert ($S_s$, that is, the first feature extraction branch), a user-specific expert ($S_p$, that is, the second feature extraction branch), and an item-specific expert ($S_\iota$, that is, the third feature extraction branch). $R_i^p$ and $r_i^\iota$ respectively represent the first information and the second information, and $g^p(.\,)$ and $g^\iota(.)$ respectively represent gating networks (that is, the first weight determining network and the second weight determining network in the foregoing embodiment) corresponding to the user and the item, and $e(.\,)$ represents a deep network, for example, a multilayer perceptron MLP network. $\alpha$ in the first line is a weight of each expert network. The feature representation of the first information and the feature representation of the second information may be obtained through weighted summation of corresponding experts.

$$\alpha_i^p = \mathrm{Softmax}(g^p(r_i^p)),\ \alpha_i^\iota = \mathrm{Softmax}(g^\iota(r_i^\iota)),$$

$$\hat{r}_i^p = \sum_{e \in S_s} \alpha_{i,e}^p \times e(r_i^p) + \sum_{e \in S_p} \alpha_{i,e}^p \times e(r_i^p),$$

$$\hat{r}_i^l = \sum_{e \in \mathcal{S}_s} \alpha_{i,e}^l \times e(r_i^l) + \sum_{e \in \mathcal{S}_t} \alpha_{i,e}^l \times e(r_i^l),$$

In the foregoing manner, by using a mixture of experts adapter, text information is mapped from semantic space to recommendation space, and valid information is stored while dimension reduction and noise processing are performed.

In addition, the obtained feature representation of the first information and a feature representation obtained based on the attribute information of the user in the preset database may be further merged and then used as a feature representation that corresponds to the user and that is to be input to the recommendation model; and the feature representation of the second information and a feature representation obtained based on the attribute information of the item in the preset database are merged and then used as a feature representation that corresponds to the item and that is input to the recommendation model.

In a possible implementation, the information about the operation performed by the user on the item may be predicted based on the first information and the second information by using the recommendation model.

In a possible implementation, the predicted operation information may indicate whether the user performs a target operation, and the target operation may be a type of behavior operation of the user. On a network platform and an application, the user usually interacts with the item in various forms (that is, there are a plurality of types of operations), for example, a type of operation such as browsing, clicking, adding to a shopping cart, or purchasing in user behaviors on an e-commerce platform.

In a possible implementation, the operation information may be probability that the user performs the target operation on the item.

For example, the operation information may be whether the user clicks, or probability of clicking.

In a possible implementation, the method described in the embodiment corresponding to FIG. 5 may be a model inference process.

In a possible implementation, the method further includes: when the operation information meets a preset condition, recommending the item to the user. In the foregoing manner, probability that the user performs an operation on the item may be obtained, and information recommendation is performed based on the probability. Specifically, when the recommendation information meets the preset condition, it may be determined to recommend the item to the user.

During information recommendation, the recommendation information may be recommended to the user in a form of a list page, to expect the user to perform a behavior or an action.

In a possible implementation, the method described in the embodiment corresponding to FIG. 5 may be a feedforward process of model training (for example, pre-training or model fine-tuning).

In a possible implementation, the recommendation model may be further updated based on the operation information and a corresponding label.

In this embodiment of this application, the prompt (that is, the first prompt) is used to guide the LLM to infer the preference of the user, and the preference information is used as an input of the recommendation model. By combining advantages of the LLM and the conventional recommendation model, a more accurate and more explainable recommendation result can be obtained, thereby improving recommendation accuracy of the recommendation model.

The following describes beneficial effects of this embodiment of this application with reference to experiments.

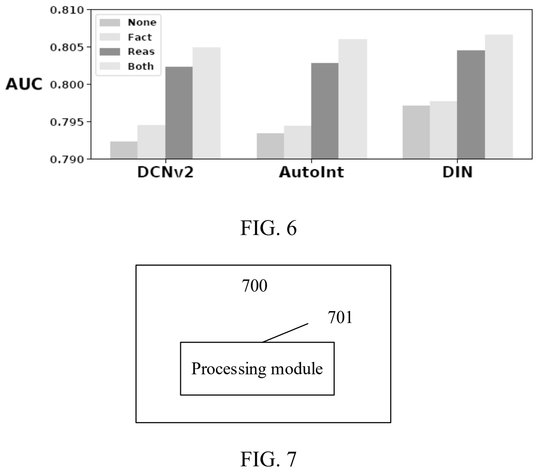

Effect of this embodiment of this application is verified based on a MovieLens-1M data set, and measurement indicators are classic accuracy AUC (the higher the better) and Logloss (the lower the better). Experiment results are shown in Table 1, Table 2, and FIG. 6 below.

1. In terms of generality, in this embodiment of this application, based on nine existing recommendation algorithms, average AUC is significantly improved by 1.5% (improvement of more than 3‰ for the AUC is considered to be significant).

Table 1

| Backbone Model | AUC | | | Logloss | | |
|---|---|---|---|---|---|---|
| | base | KAR | improv. | base | KAR | improv. |
| DCNv2 | 0.7924 | **0.8049*** | 1.58 % | 0.5451 | **0.5315*** | 2.50 % |
| DCN | 0.7929 | **0.8043*** | 1.46 % | 0.5457 | **0.5319*** | 2.53 % |
| DeepFM | 0.7928 | **0.8041*** | 1.44 % | 0.5462 | **0.5321*** | 2.57 % |
| FiBiNet | 0.7925 | **0.8051*** | 1.59 % | 0.5450 | **0.5310*** | 2.56 % |
| AutoInt | 0.7934 | **0.8060*** | 1.59 % | 0.5440 | **0.5297*** | 2.65 % |
| FiGNN | 0.7944 | **0.8054*** | 1.39 % | 0.5424 | **0.5307*** | 2.16 % |
| xDeepFM | 0.7942 | **0.8041*** | 1.25 % | 0.5457 | **0.5317*** | 2.57 % |
| DIEN | 0.7960 | **0.8059*** | 1.25 % | 0.5469 | **0.5298*** | 3.13 % |

(continued)

| Backbone Model | AUC | | | Logloss | | |
|---|---|---|---|---|---|---|
| | base | KAR | improv. | base | KAR | improv. |
| DIN | 0.7975 | **0.8066 *** | 1.15 % | 0.5387 | **0.5304*** | 1.55% |

\* denotes statistically significant improvement (t-test with p-value < 0.05) over the backbone model.

In terms of validity, compared with an existing pre-trained recommendation model, the AUC is significantly improved by more than 1%. In addition, both the user inference knowledge and the item fact knowledge provide significant enhancement effect, and better effect can be achieved based on a combination of the user inference knowledge and the item fact knowledge.

Table 2

| Model | AUC | Logloss |
|---|---|---|
| UnisRec | 0.7891 | 0.5496 |
| VQ-Rec | 0.7914 | 0.5456 |
| base(DIN) | 0.7975 | 0.5387 |
| KAR(DIN) | **0.8066*** | **0.5304*** |

\* denotes statistically significant improvement (t-test with p-value < 0.05) over the baseline/backbone models.

The following describes, from a perspective of an apparatus, a data processing apparatus provided in an embodiment of this application. FIG. 7 is a diagram of a structure of a data processing apparatus according to an embodiment of this application. As shown in FIG. 7, the data processing apparatus 700 provided in this embodiment of this application includes the following modules.

A processing module 701 is configured to: obtain a first prompt prompt, where the first prompt includes attribute information of a user, and the first prompt indicates to infer a preference of the user based on the attribute information of the user;

obtain first information based on the first prompt by using a large language model LLM; and

predict, based on the first information and second information by using a recommendation model, information about an operation performed by the user on an item, where the second information is attribute information of the item.

For specific descriptions of the processing module 701, refer to the descriptions of step 501 to step 503 in the foregoing embodiment. Details are not described herein again.

In a possible implementation, the first prompt further includes historical operation information of the user, and the first prompt specifically indicates to infer the preference of the user based on the attribute information of the user and the historical operation information.

In a possible implementation, the first prompt further includes a factor associated with a preference of the user for the item, and the first prompt specifically indicates to analyze the preference of the user based on the attribute information of the user and the factor.

In a possible implementation, the factor is determined based on a third prompt by using the LLM, and the third prompt indicates to determine the factor associated with the preference of the user for the item.

In a possible implementation, the first information is related to the preference of the user, and the preference is not included in the attribute information.

In a possible implementation, the first prompt further indicates to determine an explanation of the inferred preference of the user.

In a possible implementation, the processing module 701 is further configured to:

obtain a second prompt, where the second prompt indicates to provide the attribute information of the item; and
obtain the second information based on the second prompt by using the LLM.

In a possible implementation, the second prompt specifically indicates to provide the attribute information of the item related to the factor associated with the preference of the user for the item.

In a possible implementation, the first information is a description in a natural language or a feature representation obtained by using the LLM.

In a possible implementation, the first information is a description in a natural language, and the processing module 701 is further configured to:

obtain a feature representation of the first information and a feature representation of the second information based on the first information and the second information by using a feature extraction network.

The processing module 701 is specifically configured to:

predict, based on the feature representation of the first information and the feature representation of the second information by using the recommendation model, the information about the operation performed by the user on the item.

In a possible implementation, the feature extraction network includes a first weight determining network, a second weight determining network, a first feature extraction branch, a second feature extraction branch, and a third feature extraction branch.

The processing module 701 is specifically configured to:

determine a first weight corresponding to the first feature extraction branch and a second weight corresponding to the second feature extraction branch based on the first information by using the first weight determining network;

determine a third weight corresponding to the first feature extraction branch and a fourth weight corresponding to the third feature extraction branch based on the second information by using the second weight determining network;

determine a first sub-feature and a second sub-feature based on the first information respectively by using the first feature extraction branch and the second feature extraction branch;

determine a third sub-feature and a fourth sub-feature based on the second information respectively by using the first feature extraction branch and the third feature extraction branch;

merge the first sub-feature and the second sub-feature based on the first weight and the second weight, to obtain a feature representation of the user; and

merge the third sub-feature and the fourth sub-feature based on the third weight and the fourth weight, to obtain a feature representation of the item.

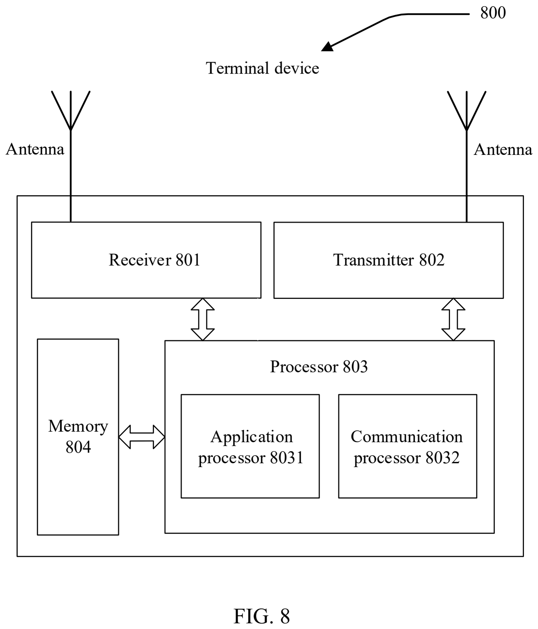

The following describes a terminal device provided in an embodiment of this application. FIG. 8 is a diagram of a structure of a terminal device according to an embodiment of this application. The terminal device 800 may be specifically a mobile phone, a tablet computer, a notebook computer, an intelligent wearable device, or the like. This is not limited herein. The terminal device 800 implements functions of the data processing method in the embodiment corresponding to FIG. 5. Specifically, the terminal device 800 includes a receiver 801, a transmitter 802, a processor 803 (there may be one or more processors 803 in the terminal device 800), and a memory 804. The processor 803 may include an application processor 8031 and a communication processor 8032. In some embodiments of this application, the receiver 801, the transmitter 802, the processor 803, and the memory 804 may be connected through a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor and operation instructions, an executable module or a data structure, a subnet thereof, or an extended set thereof. The operation instructions may include various operation instructions used to implement various operations.

The processor 803 controls an operation of the terminal device. In specific application, components of the terminal device are coupled together by using a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 803, or may be implemented by the processor 803. The processor 803 may be an integrated circuit chip and has a signal processing capability. In an implementation process, the steps in the foregoing method may be implemented by using a hardware integrated logical circuit in the processor 803 or by using instructions in a form of software. The processor 803 may be a general-purpose processor, a digital signal processor (digital signal processor, DSP), a microprocessor or microcontroller, a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 803 may implement or perform methods, steps, and logical block diagrams in the method embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 804. The processor 803 reads information in the memory 804, and completes steps 501 to 503 in the foregoing embodiment in combination with hardware of the processor 803.

The receiver 801 may be configured to: receive input digital or character information, and generate signal input related to a related setting and function control of the terminal device. The transmitter 802 may be configured to output digital or character information through a first interface. The transmitter 802 may be further configured to send instructions to a disk pack through the first interface, to modify data in the disk pack. The transmitter 802 may further include a display device, for example, a display.

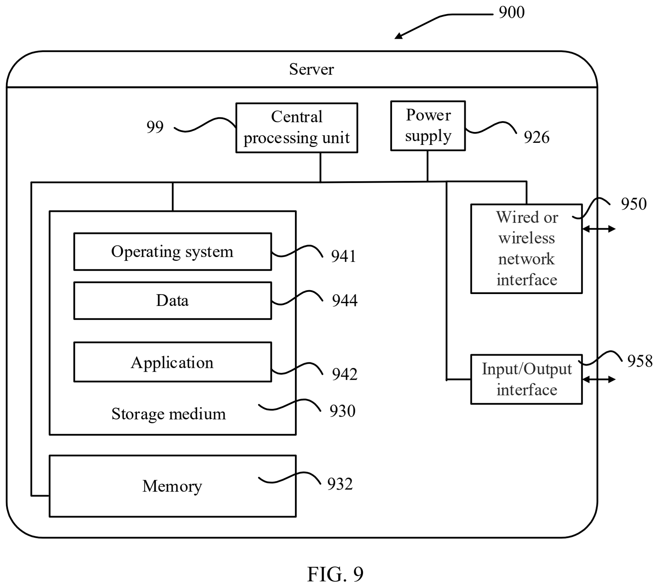

An embodiment of this application further provides a server. FIG. 9 is a diagram of a structure of a server according to an embodiment of this application. Specifically, the server 900 is implemented by one or more servers. The server 900 may vary greatly due to different configurations or performance, and may include one or more central processing units (central processing units, CPUs) 99 (for example, one or more processors) and a memory 932, and one or more storage media 930 (for example, one or more mass storage devices) that stores an application 942 or data 944. The memory 932 and the storage medium 930 may be used for temporary storage or persistent storage. A program stored in the storage medium 930 may include one or more modules (not shown in the figure), and each module may include a series of instruction operations for the server. Further, the central processing unit 99 may be configured to: communicate with the storage medium 930, and execute, on the server 900, the series of instruction operations in the storage medium 930.

The server 900 may further include one or more power supplies 926, one or more wired or wireless network interfaces 950, one or more input/output interfaces 958, or one or more operating systems 941, for example, Windows ServerTM, Mac OS XTM, UnixTM, LinuxTM, and FreeBSDTM.

Specifically, the server may perform step 501 to step 503 or step 701 to step 703 in the foregoing embodiment.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used to process a signal. When the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

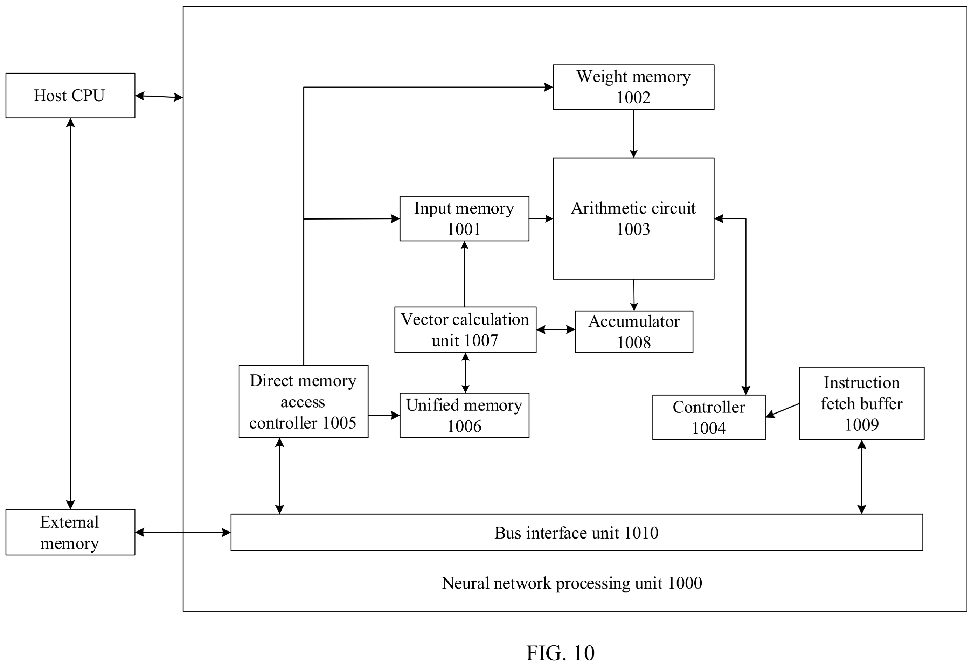

Specifically, FIG. 10 is a diagram of a structure of a chip according to an embodiment of this application. The chip may be represented as a neural network processing unit NPU 1000. The NPU 1000 is mounted to a host CPU (Host CPU) as a coprocessor, and the host CPU allocates a task. A core part of the NPU is an arithmetic circuit 1003. A controller 1004 controls the arithmetic circuit 1003 to extract matrix data in a memory and perform a multiplication operation.

The NPU 1000 may implement, through cooperation between internal components, the data processing method provided in the embodiment described in FIG. 5.

More specifically, in some implementations, the arithmetic circuit 1003 in the NPU 1000 includes a plurality of process engines (Process Engines, PEs). In some implementations, the arithmetic circuit 1003 is a two-dimensional systolic array. The arithmetic circuit 1003 may alternatively be a one-dimensional systolic array or another electronic circuit capable of performing mathematical operations such as multiplication and addition. In some implementations, the arithmetic circuit 1003 is a general-purpose matrix processor.

For example, it is assumed that there is an input matrix A, a weight matrix B, and an output matrix C. The arithmetic circuit fetches, from a weight memory 1002, data corresponding to the matrix B, and caches the data on each PE in the arithmetic circuit. The arithmetic circuit fetches data of the matrix A from an input memory 1001, to perform a matrix operation on the matrix B, and stores an obtained partial result or an obtained final result of the matrix in an accumulator (accumulator) 1008.

A unified memory 1006 is configured to store input data and output data. Weight data is directly transferred to the weight memory 1002 by using a direct memory access controller (Direct Memory Access Controller, DMAC) 1005. The input data is also transferred to the unified memory 1006 by using the DMAC.

A BIU is a bus interface unit, namely, a bus interface unit 1010, and is configured to perform interaction between an AXI bus, and the DMAC and an instruction fetch buffer (Instruction Fetch Buffer, IFB) 1009.

The bus interface unit 1010 (Bus Interface Unit, BIU for short) is used by the instruction fetch buffer 1009 to obtain instructions from an external memory, and further used by the storage unit access controller 1005 to obtain original data of the input matrix A or the weight matrix B from the external memory.

The DMAC is mainly configured to: transfer input data in the external memory DDR to the unified memory 1006, transfer weight data to the weight memory 1002, or transfer input data to the input memory 1001.

A vector calculation unit 1007 includes a plurality of operation processing units. If necessary, further processing is performed on output of the arithmetic circuit 1003, for example, vector multiplication, vector addition, an exponential operation, a logarithmic operation, or value comparison. The vector calculation unit 1207 is mainly used for non-convolutional/fully connected layer network computation in a neural network, such as batch normalization (batch normalization), pixel-level summation, and upsampling on a feature map.

In some implementations, a processed vector output by the vector calculation unit 1007 can be stored in the unified memory 1006. For example, the vector calculation unit 1007 may apply a linear function or a nonlinear function to the output of the arithmetic circuit 1003, for example, perform linear interpolation on a feature plane extracted at a convolutional layer. For another example, the linear function or the nonlinear function is applied to a vector of an accumulated value to generate an activation value. In some implementations, the vector calculation unit 1007 generates a normalized value, a pixel-level summation value, or both. In some implementations, the processed output vector can be used as an activated input to the arithmetic circuit 1003, for example, the processed output vector can be used at a subsequent layer of the neural network.

The instruction fetch buffer (instruction fetch buffer) 1009 connected to the controller 1004 is configured to store instructions used by the controller 1004.

The unified memory 1006, the input memory 1001, the weight memory 1002, and the instruction fetch buffer 1009 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one place, or may be distributed on a plurality of network units. A part or all of the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, in this application, software program implementation is a better implementation in most cases. Based on such an understanding, the technical solutions of this application essentially or the part contributing to the conventional technologies may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

**Claims**

1.  A data processing method, wherein the method comprises:

    obtaining a first prompt prompt, wherein the first prompt comprises attribute information of a user, and the first prompt indicates to infer a preference of the user based on the attribute information of the user;
    obtaining first information based on the first prompt by using a large language model LLM; and
    predicting, based on the first information and second information by using a recommendation model, information about an operation performed by the user on an item, wherein the second information is attribute information of the item.

2.  The method according to claim 1, wherein the first prompt further comprises historical operation information of the user, and the first prompt specifically indicates to infer the preference of the user based on the attribute information of the user and the historical operation information.

3.  The method according to claim 1 or 2, wherein the first prompt further comprises a factor associated with a preference of the user for the item, and the first prompt specifically indicates to analyze the preference of the user based on the attribute information of the user and the factor.

4.  The method according to claim 3, wherein the factor is determined based on a third prompt by using the LLM, and the third prompt indicates to determine the factor associated with the preference of the user for the item.

5.  The method according to any one of claims 1 to 4, wherein the first information is related to the preference of the user, and the preference is not comprised in the attribute information.

6.  The method according to any one of claims 1 to 5, wherein the first prompt further indicates to determine an explanation of the inferred preference of the user.

7.  The method according to any one of claims 1 to 6, wherein the method further comprises:

    obtaining a second prompt, wherein the second prompt indicates to provide the attribute information of the item; and
    obtaining the second information based on the second prompt by using the LLM.

8.  The method according to any one of claims 3 to 7, wherein the second prompt specifically indicates to provide the attribute information of the item related to the factor associated with the preference of the user for the item.

9.  The method according to any one of claims 1 to 8, wherein the first information is a description in a natural language, and the method further comprises:

    obtaining a feature representation of the first information and a feature representation of the second information based on the first information and the second information by using a feature extraction network; and
    predicting, based on the first information and the second information by using the recommendation model, the information about the operation performed by the user on the item comprises:
    predicting, based on the feature representation of the first information and the feature representation of the second information by using the recommendation model, the information about the operation performed by the user on the item.

10. The method according to claim 9, wherein the feature extraction network comprises a first weight determining network, a second weight determining network, a first feature extraction branch, a second feature extraction branch, and a third feature extraction branch; and
    obtaining the feature representation of the first information and the feature representation of the second information based on the first information and the second information by using the feature extraction network comprises:

    determining a first weight corresponding to the first feature extraction branch and a second weight corresponding to the second feature extraction branch based on the first information by using the first weight determining network;

determining a third weight corresponding to the first feature extraction branch and a fourth weight corresponding to the third feature extraction branch based on the second information by using the second weight determining network;

determining a first sub-feature and a second sub-feature based on the first information respectively by using the first feature extraction branch and the second feature extraction branch;

determining a third sub-feature and a fourth sub-feature based on the second information respectively by using the first feature extraction branch and the third feature extraction branch;

merging the first sub-feature and the second sub-feature based on the first weight and the second weight, to obtain a feature representation of the user; and

merging the third sub-feature and the fourth sub-feature based on the third weight and the fourth weight, to obtain a feature representation of the item.

11. A data processing apparatus, wherein the apparatus comprises:

a processing module, configured to: obtain a first prompt prompt, wherein the first prompt comprises attribute information of a user, and the first prompt indicates to infer a preference of the user based on the attribute information of the user;

obtain first information based on the first prompt by using a large language model LLM; and

predict, based on the first information and second information by using a recommendation model, information about an operation performed by the user on an item, wherein the second information is attribute information of the item.

12. The apparatus according to claim 11, wherein the first prompt further comprises historical operation information of the user, and the first prompt specifically indicates to infer the preference of the user based on the attribute information of the user and the historical operation information.

13. The apparatus according to claim 11 or 12, wherein the first prompt further comprises a factor associated with a preference of the user for the item, and the first prompt specifically indicates to analyze the preference of the user based on the attribute information of the user and the factor.

14. The apparatus according to claim 13, wherein the factor is determined based on a third prompt by using the LLM, and the third prompt indicates to determine the factor associated with the preference of the user for the item.

15. The apparatus according to any one of claims 11 to 14, wherein the first information is related to the preference of the user, and the preference is not comprised in the attribute information.

16. The apparatus according to any one of claims 11 to 15, wherein the first prompt further indicates to determine an explanation of the inferred preference of the user.

17. The apparatus according to any one of claims 11 to 16, wherein the processing module is further configured to:

obtain a second prompt, wherein the second prompt indicates to provide the attribute information of the item; and

obtain the second information based on the second prompt by using the LLM.

18. The apparatus according to any one of claims 11 to 17, wherein the first information is a description in a natural language or a feature representation obtained by using the LLM.

19. The apparatus according to any one of claims 11 to 18, wherein the first information is the description in the natural language, and the processing module is further configured to:

obtain a feature representation of the first information and a feature representation of the second information based on the first information and the second information by using a feature extraction network; and

the processing module is specifically configured to:

predict, based on the feature representation of the first information and the feature representation of the second information by using the recommendation model, the information about the operation performed by the user on the item.

20. The apparatus according to claim 19, wherein the feature extraction network comprises a first weight determining network, a second weight determining network, a first feature extraction branch, a second feature extraction branch, and a third feature extraction branch; and
the processing module is specifically configured to:

determine a first weight corresponding to the first feature extraction branch and a second weight corresponding to the second feature extraction branch based on the first information by using the first weight determining network;
determine a third weight corresponding to the first feature extraction branch and a fourth weight corresponding to the third feature extraction branch based on the second information by using the second weight determining network;
determine a first sub-feature and a second sub-feature based on the first information respectively by using the first feature extraction branch and the second feature extraction branch;
determine a third sub-feature and a fourth sub-feature based on the second information respectively by using the first feature extraction branch and the third feature extraction branch;
merge the first sub-feature and the second sub-feature based on the first weight and the second weight, to obtain a feature representation of the user; and
merge the third sub-feature and the fourth sub-feature based on the third weight and the fourth weight, to obtain a feature representation of the item.

21. A computing device, wherein the computing device comprises a memory and a processor, the memory stores code, and the processor is configured to: obtain the code, and perform the method according to any one of claims 1 to 10.

22. A computer storage medium, wherein the computer storage medium stores one or more instructions, and when the instructions are executed by one or more computers, the one or more computers are enabled to perform the method according to any one of claims 1 to 10.

23. A computer program product, comprising code, wherein when the code is executed, the method according to any one of claims 1 to 10 is implemented.

Intelligent information chain

Intelligent products and industry applications

| Translation/Text analysis/... | Speech/Vision/ Image/... |

| Data | Data processing: | Data training/ Machine learning/ Deep learning | Searching/ Inference/ Decision-making | ... |

| Infrastructure | Sensor | Smart chip | Basic platform | ... |

IT value chain

FIG. 1

FIG. 2

300

Execution device 210

Data storage system 250

Communication network

Local device 301

Local device 302

For example

FIG. 3

Offline training module → Recommendation model → Online prediction module

A user performs feedback for displayed items

Select and rank the to-be-displayed items

FIG. 4

| Obtain a first prompt prompt, where the first prompt includes attribute information of a user, and the first prompt indicates to infer a preference of the user based on the attribute information of the user | 501 |

| Obtain first information based on the first prompt by using a large language model LLM | 502 |

| Predict, based on the first information and second information by using a recommendation model, information about an operation performed by the user on an item, where the second information is attribute information of the item | 503 |

FIG. 5

FIG. 6

FIG. 7

800

Terminal device

Antenna

Antenna

| Receiver 801 | Transmitter 802 |

Processor 803

| Memory 804 | Application processor 8031 | Communication processor 8032 |

FIG. 8

900

Server

99 ⌇ Central processing unit

Power supply ⌇ 926

Operating system ⌇ 941

Data ⌇ 944

Application ⌇ 942

Storage medium ⌇ 930

Memory ⌇ 932

Wired or wireless network interface ⌇ 950

Input/Output interface ⌇ 958

FIG. 9

FIG. 10

# EP 4 718 287 A1

## INTERNATIONAL SEARCH REPORT

| International application No. |
|---|
| **PCT/CN2024/098847** |

| A. | CLASSIFICATION OF SUBJECT MATTER |
|---|---|

G06F 16/9535(2019.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI; IEEE; BING: 推荐, 大语言模型, 摘要, 总结, 用户, 物品, 特征, 提示, recommend, LLM, abstract, summary, user, item, feature, prompt

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117194766 A (HUAWEI TECHNOLOGIES CO., LTD.) 08 December 2023 (2023-12-08) claims 1-23, and description, paragraphs 143-246 | 1-23 |
| Y | CN 115237732 A (HUAWEI TECHNOLOGIES CO., LTD.) 25 October 2022 (2022-10-25) description, paragraphs 219-269 | 1-9, 11-19, 21-23 |
| Y | CN 113850654 A (BEIJING WODONG TIANJUN INFORMATION TECHNOLOGY CO., LTD. et al.) 28 December 2021 (2021-12-28) description, paragraphs 100-212 | 1-9, 11-19, 21-23 |
| Y | RADLINSKI, Filip et al. "On Natural Language User Profiles for Transparent and Scrutable Recommendation" [online], [search date 27 August 2024], search on the Internet: <https://arxiv.org/abs/2205.09403>, 19 May 2022 (2022-05-19), pp. 2-10 | 1-9, 11-19, 21-23 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 August 2024** | **13 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

31

## INTERNATIONAL SEARCH REPORT

| International application No. |
|---|
| **PCT/CN2024/098847** |

**C.    DOCUMENTS CONSIDERED TO BE RELEVANT**

| Category* | Citation of document, with indication, where appropriate, of the relevant passages | Relevant to claim No. |
|---|---|---|
| Y | GAO, Yunfan et al. "Chat-REC: Towards Interactive and Explainable LLMs-Augmented Recommender System" <br> *[online], [search date 27 August 2024], search on the Internet: <https://arxiv. ORG/ ABS/2303. 14524>,* 25 May 2023 (2023-05-25), <br> pages 4-8, and 16 | 1-9, 11-19, 21-23 |
| A | US 2023161808 A1 (ADOBE INC.) 25 May 2023 (2023-05-25) <br> entire document | 1-23 |

Form PCT/ISA/210 (second sheet) (July 2022)

32

**INTERNATIONAL SEARCH REPORT**
Information on patent family members

International application No.

**PCT/CN2024/098847**

| Patent document cited in search report | | | Publication date (day/month/year) | Patent family member(s) | | | Publication date (day/month/year) |
|---|---|---|---|---|---|---|---|
| CN | 117194766 | A | 08 December 2023 | None | | | |
| CN | 115237732 | A | 25 October 2022 | WO | 2024002167 | A1 | 04 January 2024 |
| CN | 113850654 | A | 28 December 2021 | None | | | |
| US | 2023161808 | A1 | 25 May 2023 | US | 11914635 | B2 | 27 February 2024 |

Form PCT/ISA/210 (patent family annex) (July 2022)

**EP 4 718 287 A1**

**Patent documents cited in the description**

- CN 202310722631